# EUROPEAN PATENT APPLICATION

(11) **EP 1 609 688 A2**
(43) Date of publication of application: **28.12.2005**
(21) Application number: 05105279.3
(22) Date of filing: 15.06.2005
(51) Int. Cl.: B60S 1/50, B60S 5/02, B67D 5/01, B67D 5/02

(54) **Liquid Dispenser**

(30) Priority: 25.06.2004 PL 36877204
(71) Applicant: MM Petro sp. z o.o., 44-240 Zory (PL)
(72) Inventor: Lewicki, Zenon, 63-400, Ostrów Wlkp (PL); Zybala, Jerzy, 63-400, Ostrów Wlkp (PL); Cieslak, Marian, 63-400, Ostrów Wlkp (PL)
(74) Representative: Korga, Leokadia

(57) **Abstract**

The liquid dispenser which has the main utility in pouring liquid washer for sprayers consists of a casing (1), in which there is a liquid dispenser assembly (2) containing a centrifugal pump (3), a pressure vessel (4) with adjustable air cushion, a flowmeter (8), control electrovalve (5), discharge valve (6).

## Description

The following invention relates to an assembly of a liquid dispenser which has main utility in pouring liquid washer for sprayers.

The Polish description of the patent application no P-340512 describes a stationary device for delivery of washer liquid which has the following features: inside the casing there is a liquid tank connected via force pump and the remaining final control elements to processor controller and loading system. The tank is also equipped with a pouring gate and air escape located in its upper bottom and with a drain valve installed in its lower bottom.

The Polish description of the utility model application no W 114060 also describes a liquid dispenser with the following characteristics: inside the casing there is a liquid delivery tank with a level sensor connected to a monoblock via suction conduit. The monoblock is, in turn, connected through a conduit to a flowmeter coupled to an impulse convereter and a counter.

According to the invention, the liquid dispenser consisting of the casing in which there is a liquid dispenser assembly with a centrifugal pump, dosing tank, flowmeter, control electrovalve, discharge valve, and a counter, is characterised by the use of a dosing tank in the form of a pressure vessel with adjustable air cushion.

The main objective of the following invention is to gain laminar discharge of the poured liquid. Chemicals used in windscreen washer liquids naturally tend to produce air bubbles and to foam the liquid. Foaming was a disadvantageous factor preventing accurate measurement of the liquid to be delivered. This in turn hindered or even made it impossible to sell the liquid from the dispenser. Pressure vessel implemented in the invention enables degassing of a liquid during the contact with air cushion, stabilising it and its laminar discharge which prevents mixing of air and the liquid. The advantage of that solution is the possibility of distributing windscreen washer liquid directly from the dispenser on petrol stations by pouring the liquid into car liquid tanks or to handy canisters.

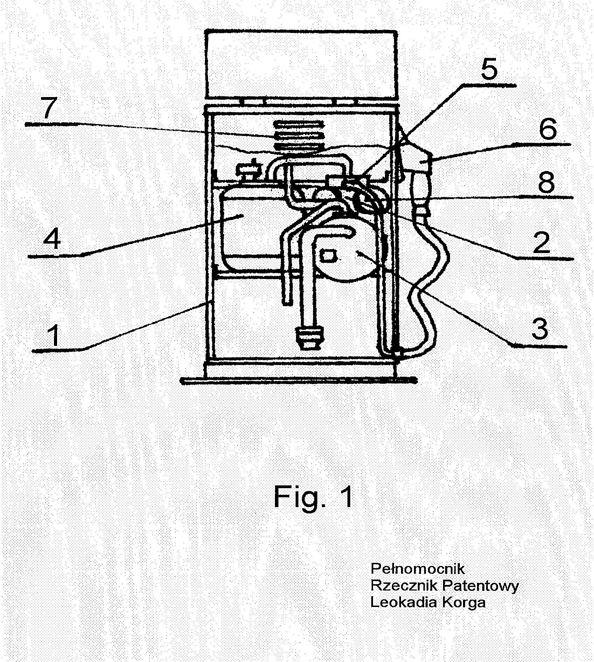

The object of the invention is shown in the picture, in which Fig. 1 shows the front view of the liquid dispenser after partial removal of the headwall.

According to the invention, the liquid dispenser consists of the casing 1 in which there is a liquid dispenser assembly 2 containing a centrifugal pump 3 drawing liquid from a storage tank and pumping it to the pressure vessel 4 with adjustable air cushion parameters. The liquid is then passed from pressure vessel 4 through a flowmeter 8 to a discharge valve 6. The process is controlled by an electrovalve 5. The amount of distributed fluid is shown on a counter 7.

## Claims

1. According to the invention, the liquid dispenser consists of the casing in which there is a liquid dispenser assembly with a centrifugal pump, dosing tank, flowmeter, control electrovalve, discharge valve, and a counter, distinguishing by that, the dosing tank (4) is in the form of a pressure vessel with adjustable air cushion.
